(19) Europäisches Patentamt
European Patent Office
Office européen des brevets

(11) EP 0 953 604 A2

(12) # EUROPEAN PATENT APPLICATION

(43) Date of publication:
03.11.1999 Bulletin 1999/44

(21) Application number: 99303198.8

(22) Date of filing: 26.04.1999

(51) Int Cl.[6]: C08L 69/00, C08L 51/04, C08K 5/523
// (C08L69/00, 51:04), (C08L51/04, 69:00)

(84) Designated Contracting States:
AT BE CH CY DE DK ES FI FR GB GR IE IT LI LU MC NL PT SE
Designated Extension States:
AL LT LV MK RO SI

(30) Priority: 27.04.1998 JP 13102898
12.06.1998 JP 16460598

(71) Applicant: Techno Polymer Co., Ltd.
Tokyo (JP)

(72) Inventors:
- Okada, Koji
  Chuo-ku, Tokyo (JP)
- Maeda, Yutaka
  Chuo-ku, Tokyo (JP)
- Ishiga, Narito
  Chuo-ku, Tokyo (JP)
- Motoshige, Ryoichi
  Chuo-ku, Tokyo (JP)

(74) Representative: Woods, Geoffrey Corlett
J.A. KEMP & CO.
Gray's Inn
14 South Square
London WC1R 5LX (GB)

(54) ## Thermoplastic resin composition

(57) The present invention relates to a thermoplastic resin composition comprising (A) 98 to 30% by weight of an aromatic polycarbonate resin, (B) 2 to 70% by weight of a high-impact polystyrene resin produced by polymerizing 80 to 30% by weight of an aromatic vinyl monomer in the presence of 20 to 70% by weight of a rubber-like polymer, and (C) 0 to 50% by weight of a styrene polymer or styrene copolymer based on 100% by weight of the total amount of the components (A), (B) and (C).

EP 0 953 604 A2

## Description

The present invention relates to a thermoplastic resin composition, more particularly, it relates to a flame-retardant thermoplastic resin composition having an excellent balance of properties such as impact strength and heat resistance along with flame retardancy. More specifically, the present invention relates to a flame-retardant thermoplastic resin composition having excellent properties such as mentioned above and comprising as its main components a polycarbonate resin (which may hereinafter be referred to as "PC resin"), a high-impact polystyrene resin (which may be referred to as "HIPS"), a styrene (co)polymer (which may be referred to as "PS resin"), a flame-retardant and polytetrafluoroethylene. (This flame-retardant thermoplastic resin composition may hereinafter be referred to simply as "thermoplastic resin composition".)

Polycarbonate resins have excellent impact resistance and heat resistance, but have a defect in relation to impact resistance, that is, high notch sensitivity. There have been many attempts for improving notched impact strength by alloying polycarbonate resins with rubber-reinforced styrene resins such as HIPS, but no satisfactory level of notched impact strength could be obtained by use of ordinary HIPS (those with a low rubber-like polymer content). Thus, there has been available no polymer composition having a good balance of properties such as notched impact strength and heat resistance along with excellent flame retardancy.

Hitherto, various flame retardant materials based on the alloys of polycarbonate resins and styrene resins have been developed. For example, U.S. Patent No. 5,234,979 discloses a polycarbonate/polystyrene resin composition, and U.S. Patent No. 5,061,745 and U.S. Patent No. 5,204,394 disclose polycarbonate/rubber-reinforced styrene resin compositions.

Polycarbonate/polystyrene resin compositions have excellent molding workability while polycarbonate/rubber-reinforced styrene resin compositions are excellent in mechanical strength. Japanese Patent Application Laid-Open (KOKAI) Nos. 8-239564 and 8-239565 disclose polycarbonate/HIPS resin compositions which have the advantageous properties of the above-mentioned two types of resin compositions. However, the generally available HIPS, because of low rubber content in comparison with ABS resins similar to styrene-based resin, are low in impact resistance and poor in surface gloss though having good molding workability.

As a result of the present inventors' earnest studies to solve the above problem, it has been found that a resin composition obtained by blending an aromatic polycarbonate resin with a high-impact polystyrene resin produced by polymerizing an aromatic vinyl monomer with a rubber-like polymer at a specific ratio is excellent in molding workability, impact strength and heat resistance.

The present invention has been attained on the basis of the above finding.

The object of the present invention is to provide a thermoplastic resin composition comprising polycarbonate resin and having excellent flame retardancy as well as a good balance of properties such as impact strength and heat resistance.

To attain the above aim, in the first aspect of the present invention, there is provided a thermoplastic resin composition comprising (A) 98 to 30% by weight of an aromatic polycarbonate resin, (B) 2 to 70% by weight of a high-impact polystyrene resin produced by polymerizing 80 to 30% by weight of an aromatic vinyl monomer in the presence of 20 to 70% by weight of a rubber-like polymer, and (C) 0 to 50% by weight of a styrene polymer or styrene copolymer based on 100% by weight of the total amount of the components (A), (B) and (C).

In the second aspect of the present invention, there is provided a thermoplastic resin composition according to the first aspect, which further comprises a flame-retardant (D) in an amount of more than 0% and not more than 20% by weight and a polytetrafluoroethylene resin (E) in an amount of more than 0% and not more than 1% by weight based on 100% by weight of the total amount of the components (A), (B), (C), (D) and (E), respectively.

In the third aspect of the present invention, there is provided a thermoplastic resin composition according to claim 7, wherein the total amount of the resin components (A), (B) and (C) is 96.99 to 80% by weight, the amount of the component (D) is 3 to 20% by weight, and the amount of the component (E) is 0.01 to 1% by weight based on 100% by weight of the total amount of the components (A), (B), (C), (D) and (E).

The PC resins (A) usable in the thermoplastic resin composition of the present invention include, for example, those obtained from reactions of various dihydroxyaryl compounds with phosgene (phosgene method) and those obtained from ester exchange reactions of dihydroxyaryl compounds with diphenyl carbonate (ester exchange method). Aromatic polycarbonates are preferred in the present invention. Typical examples of such aromatic polycarbonates are those obtained from reaction of 2,2'-bis(4-hydroxyphenyl)propane (bisphenol A) with phosgene.

Examples of the dihydroxyaryl compounds usable as base material of said polycarbonates include bis(4-hydroxyphenyl)methane, 1,1'-bis(4-hydroxyphenyl)ethane, 2,2'-bis(4-hydroxyphenyl)propane, 2,2'-bis(4-hydroxyphenyl) butane, 2,2'-bis(4-hydroxyphenyl)octane, 2,2'-bis(4-hydroxyphenyl)phenylmethane, 2,2'-bis (4-hydroxy-3-methylphenyl)propane, 2,2'-bis (4-hydroxy-3-t-butylphenyl)propane, 2,2'-bis(4-hydroxy-3-bromophenyl)propane, 2,2'-bis (4-hydroxy-3,5-dichlorophenyl)propane, 1,1'-bis (4-hydroxyphenyl)cyclopentane, 1,1'-bis(4-hydroxyphenyl)cyclohexane, 4,4'-dihydroxydiphenyl ether, 4,4'-dihydroxy-3,3'-dimethyldiphenyl ether, 4,4'-dihydroxyphenyl sulfide, 4,4'-dihydroxy-3,3'-dimethylphenyl sulfide, 4,4'-dihydroxyphenyl sulfide, 4,4'-dihydroxy-3,3'-dimethylphenyl sulfide, 4,4'-dihydroxydiphenyl sulfoxide, 4,4'-dihydroxy-3,3'-dimethylphenyl sulfide, 4,4'-dihydroxyphenyl sulfoxide, 4,4'-dihydroxy-3,3'-dimethyldiphenyl sulfoxide, 4,4'-dihydroxydiphenylsulfone, 4,4'-dihydroxy-3,3'-dimethyldiphenylsulfone, hydroquinone, and resorcin. These compounds may be used either singly or as a mixture of two or more of them. Of these compounds, 2,2'-bis(4-hydroxyphenyl)propane (bisphenol A) is especially preferred.

The viscosity-average molecular weight of the said PC resin (A) is preferably 10,000 to 40,000, more preferably 15,000 to 25,000. When the molecular weight is high, a higher notched impact strength is attained, but the fluidity is low. It is possible to use two or more types of polycarbonate differing in molecular weight.

The amount of the PC resin (A) blended is 98 to 30% by weight, preferably 98 to 50% by weight, more preferably 96 to 60% by weight, based on the total amount of the components (A) to (C) (thermoplastic resin). If the amount of the PC resin exceeds 98% by weight or is less than 30% by weight, the produced composition may show poor notched impact strength.

HIPS (B) used as the component of the thermoplastic resin composition of the present invention is a polymer obtained from graft polymerization of an aromatic vinyl monomer in the presence of a rubber-like polymer whose glass transition temperature is not more than normal temperature (23°C). As the rubber-like polymer, there can be used, for example, diene rubber-like polymers and non-diene rubber-like polymers. Examples of the diene rubber-like polymers include polybutadiene, styrene-butadiene copolymer, styrene-isoprene copolymer, butadiene-acrylonitrile copolymer, butadiene-(meth)acrylic ester copolymer, styrene-butadiene block copolymer, and styrene-isoprene block copolymer.

Examples of the non-diene rubber-like polymers include ethylene-α-olefinic rubber-like polymers such as ethylene-α-olefin copolymer and ethylene-α-olefin-nonconjugated diene copolymer; hydrogenation products of diene-based polymers such as hydrogenation product of styrene-butadiene (block) copolymer, hydrogenation product of styrene-isoprene (block) copolymer, hydrogenation product of butadiene-acrylonitrile copolymer, hydrogenation product of butadiene-(meth)acrylic ester copolymer and hydrogenation product of other butadiene-based (co)polymers; silicone rubbers, acrylic rubbers and the like. In case where a silicone rubber is used, it is preferable to use the one in which a graft crosslinking agent (e.g. the one containing a vinyl group, or γ-methacryloxypropylmethyldimethoxysilane) has been copolymerized in an amount of approximately 0.01 to 10% by weight.

Examples of the α-olefin in the said ethylene-α-olefinic rubber-like polymers include propylene, 1-butene, 1-pentene, 1-hexene, 4-methyl-1-pentene, and 1-decene. Propylene and 1-butene are particularly preferred. As the said non-conjugated diene, there can be used, for example, cyclopentadiene, ethylidene norbornene, 1,4-hexadiene, and 1,4-cyclopentadiene.

Of the said rubber-like polymers, polybutadiene and styrene-butadiene copolymer are preferred. These rubber-like polymers may be used either singly or as a mixture of two or more of them.

The percentage of the rubber-like polymer in HIPS (B) is 20 to 70% by weight, preferably 25 to 70% by weight, more preferably 35 to 70% by weight. If the percentage of the rubber-like polymer is less than 20% by weight, the produced composition may be unsatisfactory in impact resistance, and if the percentage exceeds 70% by weight, heat stability of the composition may be deteriorated.

Examples of the aromatic vinyl monomers usable for HIPS (B) include styrene, t-butylstyrene, α-methylstyrene, p-methylstyrene, divinylbenzene, 1,1-diphenylstyrene, N,N-diethyl-p-aminoethylstyrene, N,N-diethyl-p-aminomethylstyrene, vinylpyridine, vinylxylene, monochlorostyrene, dichlorostyrene, monobromostyrene, dibromostyrene, monofluorostyrene, ethylstyrene, and vinylnaphthalene. Styrene, α-methystyrene and p-methylstyrene are preferred. These aromatic vinyl monomers may be used either singly or as a mixture of two or more of them.

HIPS (B) used in the present invention can be produced by the known addition polymerization methods such as emulsion polymerization, solution polymerization, suspension polymerization and bulk polymerization. Commercial HIPS's are usually produced by bulk polymerization or bulk-suspension polymerization. HIPS used in the present invention, however, is preferably produced by emulsion polymerization because of the increased rubber-like polymer content.

For such emulsion polymerization, a method can be employed in which an aromatic vinyl monomer is emulsified and then graft polymerized in the presence of a latex comprising of the rubber-like polymer particles having a specific size. The average particle size of the rubber-like polymer is preferably 0.05 to 0.8 μm, more preferably 0.15 to 0.6 μm. Use of two or more rubber-like polymers differing in rubber particle size makes it possible to obtain a composition having an even better balance of properties such as notched impact strength and heat resistance. It is preferred to use two rubber-like polymers differing in particle size, one polymer having a particle size in the range of about 0.1 to 0.3 μm and the other in the range of about 0.4 to 0.7 μm. In this case, it is possible to prepare the component (B) in the presence of two rubber-like polymers or to use two types of component (B) differing in rubber particle size. The produced latex is a mixture of a polymer having an aromatic vinyl monomer graft polymerized around the rubber-like polymer particles and a (co)polymer comprising an aromatic vinyl monomer alone. This latex is precipitated with an acid or a salt to let a polymer separate out, and the separated polymer is washed, dried and pelletized to be offered as a product.

As the polymerization initiator, there can be used the redox type initiators comprising a combination of an organic hydroperoxide such as cumene hydroperoxide, diisopropylbenzene hydroperoxide or paramenthane hydroperoxide and a reducing agent such as a saccharated pyrophosphous acid formulation or a sulfoxylate formulation, as well as persulfates and peroxides such as azobisisobutyronitirle and benzoyl peroxide. It is preferred to use an oil-soluble initiator, particularly a redox type comprising a combination of an organic hydroperoxide such as cumene hydroperoxide, diisopropylbenzene hydroperoxide or paramenthane hydroperoxide and a reducing agent such as a saccharated pyrophosphorous acid formulation or a sulfoxylate formulation. It is also possible to use a combination of an oil-soluble initiator such as mentioned above and a water-soluble initiator. In case of using such a combination, the percentage of the water-soluble initiator should be not more than 40% by weight, preferably not more than 30% by weight, based on the total amount of both types of initiator. The polymerization initiator may be added to the polymerization system either all at one time or continuously. The amount of the polymerization initiator used is usually 0.05 to 5% by weight, preferably 0.1 to 1% by weight, based on the amount of the monomer.

As the chain transfer agent, mercaptans such as octylmercaptan, n-dodecylmercaptan, t-dodecylmercaptan, n-hexadecylmercaptan, n-tetradecylmercaptan and t-tetradecylmercaptan, hydrocarbons such as tetraethylthiuram sulfide, carbon tetrachloride, ethylene bromide and pentaphenylethane, and dimers of acrolein, methacrolein, allyl alcohol, 2-ethylhexyl thioglycolate, α-methylstyrene and the like can be used. These chain transfer agents can be used either singly or as a combination of two or more of them. As for the way of addition of the chain transfer agent, it may be added all at one time, or may be added by portions or continuously. The amount of the chain transfer agent used is usually about 0.05 to 3% by weight based on the amount of the monomer.

As the emulsifying agent, anionic, nonionic and amphoteric surface active agents can be used. Examples of the anionic surface active agents usable in the present invention include sulfuric esters of higher alcohols, alkylbenzene sulfonates, fatty acid sulfonates, phosphates and fatty acid salts. Examples of the nonionic surface active agents include the ordinary alkyl esters, alkyl ethers and alkyl phenyl ethers of polyethylene glycol. The amphoteric surface active agents include those comprising a carboxylic acid salt, a sulfuric ester salt, a sulfonate, a phosphorous ester salt or the like as anion moiety and an amine salt, a quaternary ammonium salt or the like as cation moiety. The amount of the emulsifying agent used is usually about 0.1 to 5% by weight based on the amount of the monomer.

Emulsion polymerization is preferably carried out at a temperature of 30 to 95°C, preferably 40 to 85°C.

The graft percentage of HIPS used as component (B) is preferably 10 to 200% by weight, more preferably 20 to 150% by weight. If the graft percentage is less than 10% by weight, the produced composition may have unsatisfactory impact resistance, while if the graft percentage exceeds 200% by weight, appearance and fluidity of the composition may be deteriorated. The graft percentage can be easily adjusted by changing the type and amount of the rubber-like polymer, polymerization initiator, chain transfer agent and emulsifying agent used, polymerization time, polymerization temperature and other factors.

The graft percentage (wt%) referred to in the present invention is the value determined from the following equation:

$$\text{Graft percentage (wt\%)} = [(y-x)/x] \times 100$$

wherein x is the weight of the rubber moiety in 1 g of HIPS, and y is the weight of the methyl ethyl ketone insolubles in lg of HIPS.

Regarding the molecular weight of HIPS used as component (B) in the present invention, the intrinsic viscosity [η] (measured in dimethylformamide at 30°C) of the methyl ethyl ketone insolubles constituting a matrix component is 0.3 to 1.2 dl/g, preferably 0.4 to 1.0 dl/g, more preferably 0.5 to 0.9 dl/g. If the said intrinsic viscosity [η] is less than 0.3 dl/g, the produced composition may be poor in impact resistance, while if it exceeds 1.2 dl/g, fluidity of the composition may be unsatisfactory. This intrinsic viscosity [η] can be easily adjusted by changing the type and amount of the polymerization initiator, chain transfer agent, emulsifying agent and solvent used, polymerization time, polymerization temperature and other factors.

The amount of HIPS (component (B)) blended is 2 to 70% by weight, preferably 2 to 50% by weight, more preferably 4 to 40% by weight, in the mixture of the components (A) - (C) (thermoplastic resin). If the amount of HIPS is less than 2% by weight, the produced composition may be deteriorated in impact resistance, and if it exceeds 70% by weight, moldability and heat resistance of the composition may be unsatisfactory.

The PS resin used as component (C) in the thermoplastic resin composition of the present invention is a polymer which can be obtained by polymerizing an aromatic vinyl monomer. As the aromatic vinyl monomer used for the component (C), those mentioned above as usable for the preparation of the component (B) can be used. Of these aromatic vinyl monomers, styrene, p-methylstyrene and α-methylstyrene are preferred. Also, these aromatic vinyl monomers can be used either singly or as a mixture of two or more of them.

The PS resin (C) used in the present invention can be produced by known polymerization methods such as

emulsion polymerization, solution polymerization, suspension polymerization and bulk polymerization.

The weight-average molecular weight of the PS resin is usually 100,000 to 500,000.

The amount of the PS resin (C) blended is 0 to 50% by weight, preferably over 0 to not more than 50% by weight, more preferably over 0 to not more than 30% by weight, even more preferably over 0 to not more than 20% by weight, in the mixture of the said components (A) to (C) (thermoplastic resin). If the amount of the PS resin exceeds 50% by weight, impact resistance of the composition may be deteriorated.

The amount of the thermoplastic resin comprising the components (A) to (C) in the thermoplastic resin composition of the present invention is usually 96.99 to 80% by weight, preferably 95 to 83% by weight. If the amount of the thermoplastic resin exceeds 96.99% by weight, the produced composition may be deteriorated in flame retardancy, while if the resin amount is less than 80% by weight, heat resistance of the composition may lower.

As the flame-retardant constituting an additional component (D) of the thermoplastic resin composition of the present invention, the organic phosphorus compounds, halogen compounds, nitrogen compounds, antimony compounds and the like can be used, either singly or in combination. Of these compounds, the organic phosphorus compounds are preferred in the present invention.

Examples of the organic phosphorus compounds usable in the present invention include the phosphoric esters such as triphenyl phosphate, trixylenyl phosphate, tricresyl phosphate, trixylenyl thiophosphate, hydroquinonebis (diphenyl phosphate), resorcinolbis(diphenyl phosphate), resorcinolbis(dixylenyl phosphate), and oligomers of triphenyl phosphate. It is preferred to use those of the phosphoric esters which are represented by the following formula (1):

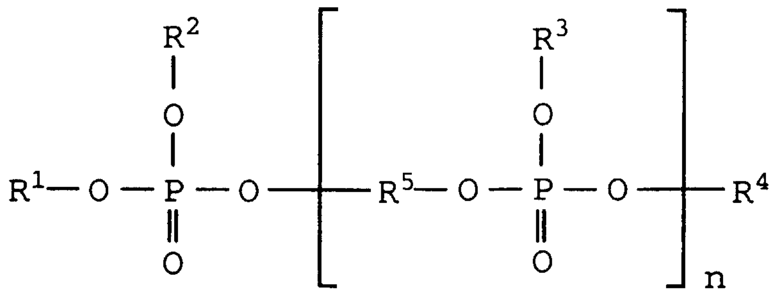

(1)

wherein $R^1$ to $R^4$ may be identical or different and represent a hydrogen atom, a phenyl group or a phenyl group substituted with a $C_1$-$C_6$ alkyl group; $R^5$ is a phenylene group or a group represented by the following formula (2); and n is a number defined by $0.9 \leq n \leq 2$.

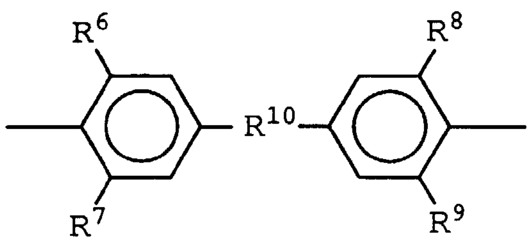

(2)

wherein $R^6$ to $R^9$ may be identical or different and represent a hydrogen atom or methyl group; and $R^{10}$ represents an alkylene group, an alkylidene group, a single bond, a -S- group or a -$SO_2$- group.

Examples of the phosphoric esters represented by the above formula (1) and usable in the present invention include those of the formula (1) wherein $R^1$ to $R^4$ are each a phenyl group, and $R^5$ is an m-phenylene group, those of the formula (1) wherein $R^1$ to $R^4$ are each a 2,6-xylenyl group, and $R^5$ is an m-phenylene group, and those of the formula (1) wherein $R^1$ to $R^4$ are each a phenyl group, and $R^5$ is a group represented by the formula (2): wherein $R^6$ to $R^9$ are each a hydrogen atom and $R^{10}$ is a propenylene group.

Examples of the halogen compounds usable as the flame-retardant (D) include tetrabromobisphenol A oligomers (which may be terminated with an epoxy group, tribromophenol or the like), brominated styrene, after-brominated polystyrene, brominated polycarbonate oligomers, tetrabromobisphenol A, chlorinated polystyrene, and aliphatic

chlorine compounds. Of these compounds, tetrabromobisphenol A oligomers are preferred (the preferred molecular weight being about 1,000 to 6,000). In case where the halogen in the halogen compounds is bromine, the preferred bromine concentration is 30 to 65% by weight, more preferably 45 to 60% by weight.

The nitrogen compounds usable as the flame-retardant (D) in the present invention include, for example, melamines and cyclized isocyanates.

The antimony compounds also usable as (D) include antimony trioxide, antimony pentoxide, etc.

The amount of the flame-retardant (D) in the thermoplastic resin composition of the present invention is 3 to 20% by weight, preferably 5 to 17% by weight based on 100% of the total amount of the components (A), (B), (C), (D) and (E) by weight.

If the amount of (D) is less than 3% by weight, the preferred flame retardancy may not be obtained, while if the amount of (D) exceeds 20% by weight, heat resistance of the composition may be unsatisfactory.

The polytetrafluoroethylene resin used as another component (E) in the thermoplastic resin composition of the present invention is commercially available. The amount of the polytetrafluoroethylene (E) in the composition is 0.01 to 1% by weight, preferably 0.05 to 0.8% by weight based on 100% of the total amount of the components (A), (B), (C), (D) and (E) by weight. If the amount of (E) is less than 0.01% by weight, the preferred flame retardancy may not be obtained, while if the amount of (E) exceeds 1% by weight, extrudability of the composition may be deteriorated.

In the thermoplastic resin composition of the present invention, various other additives may be contained for the purpose of improving fluidity, rigidity, heat stability, weather resistance, antistatic properties, appearance, etc. For instance, a low-molecular weight polyethylene or an organic phosphorus compound may be contained for improving fluidity of the composition.

Also, in the thermoplastic resin composition of the present invention, one or more of the fillers such as talc, mica, wollastonite, zinc oxide whisker, potassium titanate whisker, glass fiber, carbon fiber, glass beads, rock filler, glass flakes, mild fiber, graphite, molybdenum bisulfide, etc., may be contained as required. Blending of such a filler or fillers affords additional rigidity to the composition.

In the thermoplastic resin composition of the present invention, sodium dihydrogenphosphate, sodium monohydrogenphosphate or a hydrate thereof may further be blended for imparting heat stability to the composition. By blending of these inorganic phosphorus compounds the heat stability in molding of the composition can be improved.

It is also possible to blend the commonly used additives, such as coupling agent, weathering agent, antioxidant, plasticizer, colorant, antistatic agent, silicone oil, foaming agent, etc., to the composition of the present invention.

Phosphorus- or sulfur-based organic compounds or hydroxyl group-containing organic compounds are preferably used as weathering agent. Polyethers and sulfonates having an alkyl group can be cited as preferred examples of antistatic agent for use in the present invention.

In the thermoplastic resin composition of the present invention, other polymers such as other types of thermoplastic resin or thermosetting resins may be blended depending on the desired use of the composition.

Examples of the other polymers usable in this invention include polypropylene, polyamides, polyesters, polysulfones, polyether sulfones, polyphenylene sulfide, liquid crystal polymers, polyvinylidene fluoride, polyamide elastomers, polyaimide-imide elastomers, polyester elastomers, polyether ester amides, phenol resins, epoxy resins, novolak resins, and resol resins. These polymers may be used either singly or by mixing two or more of them.

It is possible to impart permanent antistatic properties to the composition by blending a polyamide elastomer, polyether ester amide or the like in the composition.

The amounts of these optional additives blended are not restricted as far as they don't affect the properties of the resin composition of the present invention.

The thermoplastic resin composition of the present invention can be obtained by adding the said components (A) to (E) either simultaneously or separately, and mixing or kneading them by using various types of extruder, Banbury mixer, kneader, roll mill or other like means. It is preferred to use a double-screw extruder. The components may be mixed (kneaded) either all together or according to a multi-stage addition way.

The thus obtained thermoplastic resin composition of the present invention can be molded into various forms of products by various molding methods such as injection molding, sheet-extrusion molding, vacuum forming, contour extrusion molding, foam molding, etc.

The molded products of the resin composition of this invention can be used for various purposes, for example, as component parts of OA and domestic appliances, disc and tray articles for vehicles, etc., housings, and the like. The moldings obtained from the resin composition of the present invention are especially suited for use as parts of portable terminals or casings of cell phones.

As described above, the flame-retardant thermoplastic resin composition of the present invention has excellent flame retardancy and a good balance of properties such as impact strength and heat resistance, and the molded products of the composition are useful as parts of OA and domestic appliances, disc and tray articles for vehicles, housings, parts of portable terminals, casings of cell phones, etc.

EXAMPLES

The present invention is further illustrated by the following Examples and Comparative Examples, in which all "parts" and "percent (%)" are by weight unless otherwise noted. Evaluations in these Examples and Comparative Examples were conducted by the following way.

Average particle size

As it was confirmed electron-microscopically that the particle size of the latex synthesized previously in an emulsified state coincides with the size of the dispersed particles in the resin, the size of the dispersed particles in the latex was measured by the light-scattering method using a laser particle size analytical system LPA-3100 (mfd. by Otsuka Electronics Co., Ltd.) according to the cumulant method (70 times integration).

Graft percentage

Determined by the method mentioned above.

Intrinsic viscosity [η]

Determined by the method mentioned above.

Flame retardancy

Determined according to the vertical flame test UL-94

Specimen: 127 mm × 12.7 mm × 3.2 mm

Izod impact strength

Determined according to ASTM D256.

Specimen: 2.5 × 1/2 × 1/2 inch, notched.

Unit: kgf·cm/cm

Tensile strength (TS) and Tensile Elongation (TE)

Determined according to ASTM D638.

Specimen: ASTM Type I
Pulling rate: 5 mm/min
Unit: $kgf/cm^2$ for TS and % for TE

Flexural strength (FS) and flexural modulus (FM)

Determined according to ASTM D790.

Specimen: 80 mm × 25 mm × 3.2 mm

Bending rate: 1.3 mm/min
Unit: $kgf/cm^2$ for both FS and FM

Rockwell hardness (RH)

Determined according to ASTM D785.

Melt flow rate (MFR)

Determined according to ASTM D1238 at 240°C under a load of 10 kg. Unit: g/10 min.

Heat resistance (HDT)

Determined according to ASTM D648. Unit: °C.

Surface gloss

Determined according to JIS K7105.
The components used in the Examples of the present invention are described as follows.

(A) Preparation of polycarbonate

(A-1)

NOVAREX 7020A (viscosity-average molecular weight: 18,000) produced by Mitsubishi Engineering-Plastics Corporation was used as polycarbonate.

(B) Preparation of styrene-based graft polymers (HIPS and ABS)

(B-1-1)

To a 5-litre reactor equipped with a stirrer, a heater/condenser and a device for feeding component materials and auxiliaries, 25 parts (calcd. as solid) of polybutadiene-based rubber latex (average particle size: 0.3 µm), 30 parts of styrene, 115 parts of deionized water and 0.53 part of disproportionated potassium rosinate soap were supplied and heated to 40°C with stirring. At the point when the temperature reached 40°C, an aqueous solution of 0.2 part of sodium pyrophosphate, 0.25 part of dextrose and 0.004 part of ferrous sulfate uniformly dissolved in 8.2 parts of deionized water, and 0.06 part of cumene hydroperoxide were added. After the addition was completed, the mixed solution was heated to 80°C over a period of 2 hours. One hour after the addition, a mixture of 45 parts of styrene, 0.80 part of disproportionated potassium rosinate soap and 51 parts of deionized water, which were mixed with stirring and emulsified, and 0.12 part of cumene hydroperoxide were added continuously over a period of 2 hours to conduct polymerization.
Thereafter, an aqueous solution of 0.11 part of sodium pyrophosphate, 0.12 part of dextrose and 0.002 part of ferrous sulfate uniformly dissolved in 4.1 parts of deionized water, and 0.08 part of cumene hydroperoxide were added. After stirring for one hour, the mixed solution was cooled to end the reaction. An anti-aging agent was added to the resulting reaction product (graft copolymer latex), and the product was solidified with a 0.2% sulfuric acid solution of 90°C, washed well with water, then dehydrated and dried to obtain a graft copolymer B-1-1. Rubber content = 25%; graft percentage = 160%; intrinsic viscosity [$\eta$] = 0.6 dl/g.

(B-1-2)

To a 5-litre reactor equipped with a stirrer, a heater/condenser and a device for feeding component materials and auxiliaries, 40 parts (calcd. as solid) of polybutadiene-based rubber latex (average particle size: 0.3 µm), 30 parts of styrene, 115 parts of deionized water and 0.53 part of disproportionated potassium rosinate soap were supplied and heated to 40°C with stirring. At the point when the temperature reached 40°C, an aqueous solution of 0.2 part of sodium pyrophosphate, 0.25 part of dextrose and 0.004 part of ferrous sulfate uniformly dissolved in 8.2 parts of deionized water, and 0.06 part of cumene hydroperoxide were added. After the addition was completed, the mixed solution was heated to 80°C over a period of 2 hours. One hour after the addition, a mixture of 30 parts of styrene, 0.53 part of disproportionated potassium rosinate soap and 34 parts of deionized water, which were mixed with stirring and emulsified, and 0.08 part of cumene hydroperoxide were added continuously to conduct polymerization.
Thereafter, an aqueous solution of 0.07 part of sodium pyrophosphate, 0.08 part of dextrose and 0.0013 part of ferrous sulfate uniformly dissolved in 2.7 parts of deionized water, and 0.05 part of cumene hydroperoxide were added. After stirring for one hour, the mixed solution was cooled to end the reaction. An anti-aging agent was added to the resultant reaction product (graft copolymer latex), and the product was solidified with a 0.2% sulfuric acid solution of 90°C, washed well with water, then dehydrated and dried to obtain a graft copolymer B-1-2. Rubber content = 40%; graft percentage = 75%; intrinsic viscosity [$\eta$] = 0.62 dl/g.

(B-1-3)

To a 5-litre reactor equipped with a stirrer, a heater/condenser and a device for feeding component materials and auxiliaries, 65 parts (calcd. as solid) of polybutadiene-based rubber latex (average particle size: 0.3 μm), 15 parts of styrene, 115 parts of deionized water and 0.27 part of disproportionated potassium rosinate soap were supplied and heated to 40°C with stirring. At the point when the temperature reached 40°C, an aqueous solution of 0.1 part of sodium pyrophosphate, 0.13 part of dextrose and 0.002 parts of ferrous sulfate uniformly dissolved in 4.1 parts of deionized water, and 0.03 part of cumene hydroperoxide were added. After the addition was completed, the mixed solution was heated to 80°C over a period of 2 hours. One hour after the addition, a mixture of 20 parts of styrene, 0.35 part of disproportionated potassium rosinate soap and 23 parts of deionized water, which were mixed with stirring and emulsified, and 0.05 part of cumene hydroperoxide were added continuously over a period of 2 hours to conduct polymerization.

Thereafter, an aqueous solution of 0.05 part of sodium pyrophosphate, 0.05 part of dextrose and 0.0009 part of ferrous sulfate uniformly dissolved in 1.8 part of deionized water, and 0.03 part of cumene hydroperoxide were added, and the mixed solution was further stirred for one hour and then cooled to end the reaction. An anti-aging agent was added to the resulting reaction product (graft copolymer latex), and the product was solidified with a 0.2% sulfuric acid solution of 90°C, washed well with water, then dehydrated and dried to obtain a graft copolymer B-1-3. Rubber content = 65%; graft percentage = 36%; intrinsic viscosity [η] = 0.67 dl/g.

(B-2-1)

A high-impact polystyrene (rubber content: 14%) produced by bulk polymerization was used.

(B-2-2)

To a 5-litre reactor equipped with a stirrer, a heater/condenser and a device for feeding component materials and auxiliaries, 75 parts (calcd. as solid) of polybutadiene-based rubber latex (average particle size: 0.3 μm), 10 parts of styrene, 115 parts of deionized water and 0.18 part of disproportionated potassium rosinate soap were supplied and heated to 40°C with stirring. At the point when the temperature reached 40°C, an aqueous solution of 0.067 part of sodium pyrophosphate, 0.083 part of dextrose and 0.0013 part of ferrous sulfate uniformly dissolved in 2.8 parts of deionized water, and 0.02 part of cumene hydroperoxided were added. After the addition was completed, the mixed solution was heated to 80°C over a period of 2 hours. One hour after the addition, a mixture of 15 parts of styrene, 0.27 part of disproportionated potassium rosinate soap and 17 parts of deionized water, which were mixed with stirring and emulsified, and 0.04 part of cumene hydroperoxide were added continuously over a period of 2 hours to conduct polymerization.

Thereafter, an aqueous solution of 0.035 part of sodium pyrophosphate, 0.04 part of dextrose and 0.0007 part of ferrous sulfate uniformly dissolved in 1.4 part of deionized water, and 0.025 part of cumene hydroperoxide were added, and the mixed solution was further stirred for one hour and then cooled to end the reaction. An anti-aging agent was added to the resulting reaction product (graft copolymer latex), and the product was solidified with a 0.2% sulfuric acid solution of 90°C, washed well with water, then dehydrated and dried to obtain a graft copolymer B-2-2. Rubber content = 75%; graft percentage = 17%; intrinsic viscosity [η] = 0.62 dl/g.

(B-2-3)

The same procedure as used for the preparation of B-1-1 was conducted except that 30 parts of styrene was replaced by 22 parts of styrene and 8 parts of acrylonitrile, and 45 parts of styrene was replaced by 33 parts of styrene and 12 parts of acrylonitrile to obtain a graft copolymer B-2-3. Rubber content = 25%; graft percentage = 149%; intrinsic viscosity [η] = 0.64 dl/g.

<u>(C) Preparation of PS resin</u>

(C-1)

A polystyrene HH102 produced by Mitsubishi Chemical Corporation was used.

(D) Preparation of flame-retardants

(D-1)

CR733S (produced by Daihachi Chemical Co., Ltd.), which is a phosphoric ester of the formula (1) wherein $R^1$ to $R^4$ are each a phenyl group and $R^5$ is an m-phenylene group, was used.

(D-2)

PX200 (produced by Daihachi Chemical Co., Ltd.), which is a phosphoric ester of the formula (1) wherein $R^1$ to $R^4$ are each a 2,6-xylenyl group and $R^5$ is an m-phenylene group, was used.

(D-3)

CR741 (produced by Daihachi Chemical Co., Ltd.), which is a phosphoric ester of the formula (1) wherein $R^1$ to $R^4$ are each a phenyl group and $R^5$ is a group of the formula (2) wherein $R^6$ to $R^9$ are each a hydrogen atom and $R^{10}$ is a propenylene group, was used.

(E) Preparation of polytetrafluoroethylene resin

(E-1)

Daiflon F201 (produced by Daikin Chemical Industries Co., Ltd.) was used.

Preparation of other components

Antioxidants:

IRGANOX 1076 (produced by Ciba-Geigy Corp.) and ADKSTAB 2112 (produced by Asahi Denka Kogyo KK) were used.

Examples 1-15 and Comparative Examples 1-12

The components (A), (B), (C), (D) and (E) of the present invention and other additive materials were melt mixed at the formulations shown in Tables 1 and 2 by an extruder at 230 to 260°C to produce the pellets, and these pellets were injection-molded into the test pieces for determining flame retardancy, Izod impact strength, tensile strength and flexural strength, under the following molding conditions.

Molding machine: J100E mfd. by Japan Steel Works, Ltd.
Mold temperature: 50±5°C
Cylinder set temperature: 230-260°C

The results are shown in Tables 1 and 2.

Table 1

| | Example 1 | Example 2 | Example 3 | Example 4 |
|---|---|---|---|---|
| Formulation (part) | | | | |
| A-1 | 95 | 95 | 95 | 70 |
| B-1-1 | 5 | - | - | 30 |
| B-1-2 | - | 5 | - | - |
| B-1-3 | - | - | 5 | - |
| B-2-1 | - | - | - | - |
| B-2-2 | - | - | - | - |
| C-1 | - | - | - | - |
| IRGANOX | 0.1 | 0.1 | 0.1 | 0.1 |
| ADKSTAB | 0.05 | 0.05 | 0.05 | 0.05 |
| Evaluation of thermoplastic resin composition | | | | |
| HDT (°C) | 135 | 136 | 135 | 121 |
| RH | 121 | 121 | 120 | 112 |
| MFR (g/10 min) | 26 | 22 | 24 | 21 |
| Izod impact strength (kgfcm/cm) | 24 | 59 | 62 | 25 |
| Surface gloss | 102 | 99 | 99 | 94 |

Table 1 (continued)

| | Example 5 | Example 6 | Example 7 | Example 8 |
|---|---|---|---|---|
| Formulation (part) | | | | |
| A-1 | 70 | 70 | 70 | 40 |
| B-1-1 | - | - | - | 60 |
| B-1-2 | 30 | - | 25 | - |
| B-1-3 | - | 30 | - | - |
| B-2-1 | - | - | - | - |
| B-2-2 | - | - | - | - |
| C-1 | - | - | 5 | - |
| IRGANOX | 0.1 | 0.1 | 0.1 | 0.1 |
| ADKSTAB | 0.05 | 0.05 | 0.05 | 0.05 |
| Evaluation of thermoplastic resin composition | | | | |
| HDT (°C) | 118 | 118 | 122 | 97 |
| RH | 105 | 90 | 107 | 100 |
| MFR (g/10 min) | 16 | 10 | 19 | 11 |
| Izod impact strength (kgfcm/cm) | 37 | 36 | 38 | 16 |
| Surface gloss | 88 | 87 | 92 | 85 |

Table 1 (continued)

| | Example 9 | Example 10 | Example 11 | Example 12 |
|---|---|---|---|---|
| Formulation (part) | | | | |
| A-1 | 85.5 | 67.5 | 67.5 | 67.5 |
| B-1-1 | - | 22.5 | - | 60 |
| B-1-2 | 9.5 | - | 22.5 | - |
| B-1-3 | - | - | - | 22.5 |
| B-2-1 | - | - | - | - |
| B-2-2 | - | - | - | - |
| C-1 | - | - | 5 | - |
| D-1 | 5.0 | 10.0 | 10.0 | 10.0 |
| D-2 | - | - | - | - |
| D-3 | - | - | - | - |
| E-1 | 0.5 | 0.5 | 0.5 | 0.5 |
| Evaluation of thermoplastic resin composition | | | | |
| Flame retardancy | V-0 | V-0 | V-0 | V-0 |
| Izod impact strength (kgfcm/cm) | 20 | 12 | 17 | 41 |
| TS | 590 | 550 | 520 | 450 |
| TE | 135 | 126 | 120 | 53 |
| FS | 970 | 940 | 840 | 730 |
| FM ($X10^3$) | 26.2 | 27.7 | 25.1 | 22.4 |
| RH | 120 | 116 | 111 | 106 |
| MFR (g/10 min) | 39 | 63 | 54 | 53 |
| HDT (°C) | 108 | 86 | 85 | 82 |
| Surface gloss | 80 | 93 | 100 | 91 |

Table 1 (continued)

| | Example 13 | Example 14 | Example 15 |
|---|---|---|---|
| Formulation (part) | | | |
| A-1 | 67.5 | 67.5 | 51.0 |
| B-1-1 | - | - | - |
| B-1-2 | 22.5 | 22.5 | 17.0 |
| B-1-3 | - | - | - |
| B-2-1 | - | - | - |
| B-2-2 | - | - | - |
| C-1 | - | - | 17.0 |
| D-1 | - | - | 15.0 |
| D-2 | 10.0 | - | - |
| D-3 | - | 10.0 | - |
| E-1 | 0.5 | 0.5 | 0.5 |
| Evaluation of thermoplastic resin composition | | | |
| Flame retardancy | V-0 | V-0 | V-0 |
| Izod impact strength (kgfcm/cm) | 15 | 15 | 11 |
| TS | 490 | 510 | 520 |
| TE | 131 | 101 | 19 |
| FS | 810 | 850 | 850 |
| FM ($X10^3$) | 23.9 | 24.7 | 28.3 |
| RH | 110 | 110 | 111 |
| MFR (g/10 min) | 50 | 51 | 114 |
| HDT (°C) | 92 | 90 | 70 |
| Surface gloss | 97 | 94 | 98 |

Table 2

| | Comp. Example 1 | Comp. Example 2 | Comp. Example 3 | Comp. Example 4 |
|---|---|---|---|---|
| Formulation (part) | | | | |
| A-1 | 70 | 40 | 70 | 20 |
| B-1-1 | - | - | - | - |
| B-1-2 | - | - | - | 80 |
| B-1-3 | - | - | - | - |
| B-2-1 | 30 | 60 | - | - |
| B-2-2 | - | - | 30 | - |
| C-1 | - | - | - | - |
| IRGANOX | 0.1 | 0.1 | 0.1 | 0.1 |
| ADKSTAB | 0.05 | 0.05 | 0.05 | 0.05 |
| Evaluation of thermoplastic resin composition | | | | |
| HDT (°C) | 120 | 96 | 118 | 82 |
| RH | 115 | 106 | 80 | 48 |
| MFR (g/10 min) | 36 | 60 | 5 | 4 |
| Izod impact strength (kgfcm/cm) | 11 | 7 | 34 | 24 |
| Surface gloss | 58 | 40 | 85 | 66 |

Table 2 (continued)

| | Comp. Example 5 | Comp. Example 6 | Comp. Example 7 | Comp. Example 8 |
|---|---|---|---|---|
| Formulation (part) | | | | |
| A-1 | 20 | 70 | 20 | 100 |
| B-1-1 | - | - | - | - |
| B-1-2 | 40 | 1 | 20 | - |
| B-1-3 | - | - | - | - |
| B-2-1 | - | - | - | - |
| B-2-2 | - | - | - | - |
| C-1 | 40 | 29 | 60 | - |
| IRGANOX | 0.1 | 0.1 | 0.1 | 0.1 |
| ADKSTAB | 0.05 | 0.05 | 0.05 | 0.05 |
| Evaluation of thermoplastic resin composition | | | | |
| HDT (°C) | 92 | 116 | 93 | 137 |
| RH | 96 | 121 | 110 | 123 |
| MFR (g/10 min) | 23 | 44 | 49 | 31 |
| Izod impact strength (kgfcm/cm) | 4 | 6 | 2 | 13 |
| Surface gloss | 82 | 86 | 86 | 105 |

Table 2 (continued)

| | Comp. Example 9 | Comp. Example 10 | Comp. Example 11 | Comp. Example 12 |
|---|---|---|---|---|
| Formulation (part) | | | | |
| A-1 | 94.0 | 67.5 | 67.5 | 67.5 |
| B-1-1 | - | - | - | - |
| B-1-2 | 1.0 | - | - | - |
| B-1-3 | - | - | - | - |
| B-2-1 | - | 22.5 | - | - |
| B-2-2 | - | - | 22.5 | - |
| B-2-3 | - | - | - | 22.5 |
| C-1 | - | - | - | - |
| D-1 | 5.0 | 10.0 | 10.0 | 10.0 |
| D-2 | - | - | - | - |
| D-3 | - | - | - | - |
| E-1 | 0.5 | 0.5 | 0.5 | 0.5 |
| Evaluation of thermoplastic resin composition | | | | |
| Flame retardancy | V-0 | V-0 | V-1 | V-0 |
| Izod impact strength (kgfcm/cm) | 7 | 3 | 36 | 18 |
| TS | 690 | 540 | 400 | 550 |
| TE | 96 | 117 | 62 | 100 |
| FS | 1,110 | 950 | 650 | 930 |
| FM ($X10^3$) | 28.5 | 28.1 | 18.9 | 28.0 |
| RH | 124 | 119 | 101 | 117 |
| MFR (g/10 min) | 46 | 93 | 40 | 40 |
| HDT (°C) | 113 | 87 | 78 | 86 |
| Surface gloss | 105 | 87 | 88 | 91 |

As seen from Table 1, all of the thermoplastic resin compositions (Examples 1 to 15) of the present invention showed excellent heat resistance (HDT), Rockwell hardness (RH), melt flow rate (MFR), notched impact strength and surface gloss. Also, as is apparent from Table 2, Comparative Example 1, which represents a comparative composition in which the content of the rubber-like polymer in the component (B) is below the defined range of the present invention, is inferior to Examples 4 to 6 in notched impact strength and surface gloss. Comparative Example 2, in which the content of the rubber-like polymer in the component (B) is also below the defined range of the present invention, is poor in notched impact strength and surface gloss. Comparative Example 3, which represents the case where the rubber-like polymer content is above the defined range of the present invention, is notably low in melt flow rate as compared with Examples 4 to 6. Comparative Example 4, which is the case where the content of the component (B) is above the defined range of the present invention, is unsatisfactory in heat resistance and melt flow rate. Comparative Example 5, in which the component (A) content is below the defined range of the present invention, is low in notched impact strength. Comparative Example 6, which has a lower content of the component (B) than defined in the present invention, is also low in notched impact strength. Comparative Example 7, which represents a composition having a higher content of the component (C) than defined in the present invention, is poor in notched impact strength. Comparative Example 8, in which the content of the component (A) is higher than defined in the present invention, is low in notched impact strength. Comparative Example 9, which represents a case of lower component (B) content than defined in the present invention, is also low in notched impact strength. Comparative Example 10, which is a composition with a lower content of the rubber-like polymer in the component (B) than defined in the present invention, is

unsatisfactory in notched impact strength. Comparative Example 11, which is a case where the content of the rubber-like polymer in the component (B) is above the defined range of the present invention, is poor in flexural modulus (FM). Comparative Example 12, in which the component B is ABS resin other than defined in the present invention, is poor in melt flow rate.

## Claims

1. A thermoplastic resin composition comprising (A) 98 to 30% by weight of an aromatic polycarbonate resin, (B) 2 to 70% by weight of a high-impact polystyrene resin produced by polymerizing 80 to 30% by weight of an aromatic vinyl monomer in the presence of 20 to 70% by weight of a rubber-like polymer, and (C) 0 to 50% by weight of a styrene polymer or styrene copolymer based on 100% by weight of the total amount of the components (A), (B) and (C).

2. A thermoplastic resin composition according to claim 1, wherein the component (B), the amount of rubber-like polymer is 25 to 70% by weight and the amount of aromatic vinyl monomer is 75 to 30% by weight based on the weight of the component (B).

3. A thermoplastic resin composition according to claim 1 or 2 wherein the component (B), the amount of rubber-like polymer is 35 to 70% by weight and the amount of aromatic vinyl monomer is 65 to 30% by weight based on the weight of the component (B).

4. A thermoplastic resin composition according to any one of the preceding claims, which comprises 98 to 30% by weight of the components (A) and 2 to 70% by weight of the component (B).

5. A thermoplastic resin composition according to any one of the preceding claims, wherein the content of the component (C) is more than 0% and not more than 50% by weight.

6. A thermoplastic resin composition according to any one of the preceding claims, which further comprises a flame-retardant (D) in an amount of more than 0% and not more than 20% by weight and a polytetrafluoroethylene resin (E) in an amount of more than 0% and not more than 1% by weight based on 100% by weight of the total amount of the components (A), (B), (C), (D) and (E), respectively.

7. A thermoplastic resin composition according to claim 6, wherein the total amount of the resin components (A), (B) and (C) is 96.99 to 80% by weight, the amount of the component (D) is 3 to 20% by weight, and the amount of the component (E) is 0.01 to 1% by weight based on 100% by weight of the total amount of the components (A), (B), (C), (D) and (E).

8. A thermoplastic resin composition according to claim 6 or 7, wherein the component (D) comprises a phosphoric ester represented by the following formula (1):

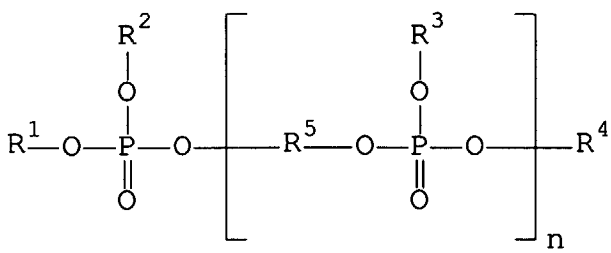

(1)

wherein $R^1$ to $R^4$ may be identical or different and represent a hydrogen atom, a phenyl group or a phenyl group substituted with a $C_1$-$C_6$ alkyl group, $R^5$ is a phenylene group or a group represented by the following formula (2), and n is a number defined by $0.9 \leq n \leq 2$:

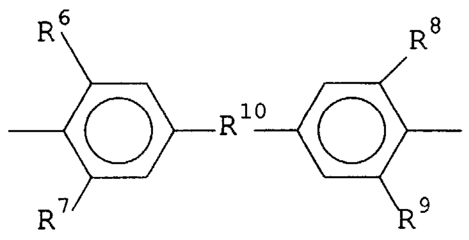

(2)

wherein $R^6$ to $R^9$ may be identical or different and represent a hydrogen atom or a methyl group, and $R^{10}$ represents an alkylene group, an alkylidene group, a single bond, a -S- group or a $-SO_2-$ group.

**9.** A thermoplastic resin composition according to any one of claims 6 to 8, which comprises 98 to 50% by weight of the component (A), 2 to 50% by weight of the component (B) and 0 to 30% by weight of the component (C) based on 100% by weight of the total amount of the components (A), (B) and (C).

**10.** A thermoplastic resin composition according to any one of the preceding claims, wherein the high-impact polystyrene resin (B) is produced by emulsion polymerization.